# EUROPÄISCHE PATENTANMELDUNG

(11) **EP 4 497 710 A1**
(43) Veröffentlichungstag der Anmeldung: **29.01.2025**
(21) Anmeldenummer: 24182387.1
(22) Anmeldetag: 14.06.2024
(51) Int. Cl.: B65G 15/58, B65G 17/32, B65G 47/91, B65G 59/02, B65G 59/04, B65G 67/08, B65G 67/24

(54) **VORRICHTUNG ZUM HANDHABEN VON GEGENSTÄNDEN, HANDHABUNGSSYSTEM, VERFAHREN ZUM HANDHABEN VON GEGENSTÄNDEN**

(30) Priorität: 28.07.2023 DE 102023120132
(71) Anmelder: J. Schmalz GmbH, 72293 Glatten (DE)
(72) Erfinder: Frey, Matthias, 72172 Sulz-Dürrenmettstetten (DE)
(74) Vertreter: DREISS Patentanwälte PartG mbB

(57) **Zusammenfassung**

Die Erfindung betrifft eine Vorrichtung (10) zum Handhaben von Gegenständen (12), insbesondere Kartonagen (12), mit einer Fördereinrichtung (14), die wenigstens einen Stetigförderer (16) umfasst, wobei der Stetigförderer (16) wenigstens ein umlaufendes Förderelement (18) umfasst, das durch eine Antriebseinheit (24) in wenigstens eine Laufrichtung (26) antreibbar ist, und mit einer Greifeinrichtung (32), die wenigstens eine Greifeinheit (34) umfasst, wobei die Greifeinheit (34) dazu ausgebildet ist, wenigstens einen Gegenstand (12) zu greifen und den gegriffenen Gegenstand (12) auf dem Stetigförderer (16), insbesondere auf dem Förderelement (18), anzuordnen, dadurch gekennzeichnet, dass die Greifeinheit (34) derart mit dem Förderelement (18) gekoppelt ist, dass sie mit dem Förderelement (18) in die Laufrichtung (26) mitbewegt wird.

## Beschreibung

Die vorliegende Erfindung betrifft eine Vorrichtung zum Handhaben von Gegenständen, mit einer Fördereinrichtung, die wenigstens einen Stetigförderer umfasst, und mit einer Greifeinrichtung, die wenigstens eine Greifeinheit umfasst. Außerdem betrifft die vorliegende Erfindung ein Handhabungssystem umfassend eine solche Vorrichtung und eine Handhabungseinrichtung zum Handhaben der Vorrichtung. Ferner betrifft die vorliegende Erfindung ein Verfahren zum Handhaben von Gegenständen mittels einer solchen Vorrichtung oder eines solchen Handhabungssystems.

In der Logistik muss typischerweise eine Vielzahl von Gegenständen wie beispielsweise Kartonagen gehandhabt werden. Es ist bekannt, zur Handhabung von Gegenständen Vorrichtungen einzusetzen, die eine Greifeinrichtung und eine Fördereinrichtung umfassen. Solche Vorrichtungen werden beispielsweise bei der Entladung von (beispielsweise gestapelten) Containern oder Lastkraftwagen eingesetzt. Die Greifeinrichtung umfasst dabei wenigstens eine Greifeinheit, die dazu ausgebildet ist, wenigstens einen Gegenstand zu greifen. Die Fördereinrichtung umfasst oftmals einen Stetigförderer, der wenigstens ein umlaufendes Förderelement umfasst. Das Förderelement ist durch eine Antriebseinheit in wenigstens eine Laufrichtung antreibbar. Ein durch die Greifeinheit gegriffener Gegenstand kann auf dem Stetigförderer angeordnet werden. Der auf dem Stetigförderer angeordnete Gegenstand kann dann durch den Stetigförderer abtransportiert werden. Beispielsweise wird der Gegenstand einem dem Stetigförderer nachgeordneten weiteren Stetigförderer zugeführt.

In bekannten Vorrichtungen ist die Greifeinheit typischerweise an einem Roboterarm befestigt, der benachbart zu dem Stetigförderer angeordnet ist. Solche Vorrichtungen sind beispielsweise aus den Druckschriften US 9,701,492 B2, WO 2016/054656 A1, US 2017/0190054 A1, DE 10 2010 033 115 A1, US 5,015,145 und US 2016/0221187 A1 bekannt. Die Vorrichtungen haben einen vergleichsweise geringen Durchsatz und sind deshalb ineffizient. Dies liegt insbesondere darin begründet, dass der Roboterarm die Greifeinheit mit einem gegriffenen Gegenstand zu dem Stetigförderer bewegen muss, um den Gegenstand auf dem Stetigförderer anzuordnen. Gerade die korrekte Anordnung des Gegenstands auf dem Stetigförderer ist mitunter zeitraubend. Sodann muss der gegriffene Gegenstand von der Greifeinheit abgelöst werden. Erst anschließend kann der Roboterarm mittels der Greifeinheit einen weiteren Handhabungsvorgang durchführen.

Die Erfindung beschäftigt sich mit der Aufgabe, bei einer Vorrichtung zum Handhaben von Gegenständen die Effizienz im Hinblick auf die Durchführung von Handhabungsvorgängen zu verbessern.

Diese Aufgabe wird erfindungsgemäß durch eine Vorrichtung mit den Merkmalen des Anspruchs 1, durch ein Handhabungssystem mit den Merkmalen des Anspruchs 10 und durch ein Verfahren mit den Merkmalen des Anspruchs 11 gelöst. Die Unteransprüche und die Beschreibung geben vorteilhafte Varianten und Ausführungsformen an.

Erfindungsgemäß ist also eine Vorrichtung zum Handhaben von Gegenständen vorgesehen. Insbesondere sind die Gegenstände Kartonagen, Kisten, Schachteln oder Boxen. Die Vorrichtung kann jedoch auch zur Handhabung von davon abweichenden Gegenständen eingesetzt werden.

Die Vorrichtung umfasst eine Fördereinrichtung, die wenigstens einen Stetigförderer umfasst. Der Stetigförderer umfasst wenigstens ein umlaufendes Förderelement, das durch eine Antriebseinheit in wenigstens eine Laufrichtung antreibbar ist. Ein umlaufendes Förderelement ist ein in Laufrichtung geschlossenes Förderelement. Wird ein umlaufendes Förderelement in eine Laufrichtung angetrieben, so erreicht jede Stelle des Förderelements in Abhängigkeit von der Länge des Förderelements und der Laufgeschwindigkeit zu einem bestimmten Zeitpunkt wieder ihre jeweilige Ausgangsposition. Insbesondere ist das Förderelement um eine oder mehrere Umlenkrollen des Stetigförderers geführt. Die besagten Umlenkrollen sind bevorzugt an einem Grundkörper des Stetigförderers drehbar gelagert. Die Antriebseinheit kann dazu ausgebildet sein, eine oder mehrere der Umlenkrollen zu drehen. Durch die Drehung der Umlenkrollen wird dann das Förderelement in die Laufrichtung angetrieben. Das Förderelement kann auch in die Laufrichtung und in eine der Laufrichtung entgegengesetzte weitere Laufrichtung antreibbar sein.

Die Vorrichtung umfasst außerdem eine Greifeinrichtung, die wenigstens eine Greifeinheit umfasst. Die Greifeinheit ist dazu ausgebildet, wenigstens einen Gegenstand zu greifen und den gegriffenen Gegenstand in den Wirkbereich des Stetigförderers anzuordnen, insbesondere auf dem Stetigförderer auf dessen umlaufenden Förderelement anzuordnen. Je nach Ausbildung der Greifeinheit kann die Greifeinheit den Gegenstand auf jeweils unterschiedliche Art und Weise greifen, wie nachstehend noch näher erläutert wird. Die Greifeinheit kann auch dazu ausgebildet sein, mehrere Gegenstände gleichzeitig zu greifen.

Es ist nun vorgesehen, dass die Greifeinheit derart mit dem Förderelement gekoppelt ist, dass sie mit dem Förderelement in die Laufrichtung mitbewegt wird.

Durch die Kopplung der Greifeinheit mit dem Förderelement kann die Effizienz im Hinblick auf Handhabungsvorgänge gesteigert werden. Wird das Förderelement im Anschluss an das Greifen eines Gegenstandes durch die Greifeinheit derart angetrieben, dass es in die Laufrichtung bewegt wird, so wird die Greifeinheit mitsamt dem gegriffenen Gegenstand mit dem Förderelement zwangsläufig mitbewegt. Durch diese Bewegung wird der gegriffene Gegenstand auf den Stetigförderer gezogen und dadurch auf dem Stetigförderer angeordnet. Die Anordnung des Gegenstands auf dem Stetigförderer ergibt sich insofern direkt aus dem Antrieb des Förderelementes und der Kopplung, insbesondere Zwangskopplung, der Greifeinheit mit dem Förderelement. Eine Positionierung mittels eines Rotoberarms oder dergleichen ist nicht notwendig. Der auf dem Stetigförderer angeordnete Gegenstand kann sodann von der Greifeinheit abgelöst und weitertransportiert werden. Beispielsweise wird der abgelöste Gegenstand einem dem Stetigförderer nachgeordneten weiteren Stetigförderer zugeführt.

Vorzugsweise umfasst die Greifeinheit mehrere Greifelemente und ist dazu ausgebildet, den Gegenstand mittels der mehreren Greifelemente zu greifen. Die Greifeinheit kann jedoch auch nur ein einziges Greifelement umfassen und dazu ausgebildet sein, den Gegenstand mittels des einzigen Greifelements zu greifen.

Vorzugsweise ist der Stetigförderer als Bandförderer ausgebildet. Eine solche Ausbildung des Stetigförderers ist bevorzugt, weil ein Bandförderer für die sichere Beförderung von Gegenständen wie Kartonagen besonders geeignet ist. Der Stetigförderer kann jedoch auch als Kettenförderer oder Kreisförderer ausgebildet sein.

Vorzugsweise ist die Greifeinheit als Sauggreifer ausgebildet. Ein Sauggreifer ist dazu ausgebildet, einen Gegenstand durch das Erzeugen eines Unterdrucks zu greifen. Hierzu sind das Greifelement bzw. die Greifelemente bei einem Sauggreifer als Saugelemente ausgebildet. Dem Greifelement bzw. den Greifelementen ist eine Unterdruckerzeugungseinheit zugeordnet, die dazu ausgebildet ist, einen Unterdruck zwischen dem Greifelement bzw. den Greifelementen und einem zu greifenden Gegenstand zu erzeugen. Der Umgebungsdruck drückt dann das Greifelement bzw. die Greifelemente an den Gegenstand, wodurch die erforderliche Haltekraft aufgebracht und der Gegenstand gegriffen wird. Ein Vorteil einer als Sauggreifer ausgebildeten Greifeinheit besteht darin, dass ein gegriffener Gegenstand einfach abgelöst werden kann, nämlich durch Belüften des Volumens, in dem der Unterdruck hergestellt ist. Die Greifeinheit kann jedoch auch als Klemmgreifer oder als Adhäsionsgreifer ausgebildet sein. Ein Klemmgreifer umfasst mehrere Greifelemente, die derart zueinander verlagerbar sind, dass der Gegenstand zwischen den Greifelementen einklemmbar ist. Durch das Einklemmen des Gegenstands zwischen den Greifelementen wird die erforderliche Haltekraft aufgebracht und der Gegenstand gegriffen. Ein Adhäsionsgreifer ist dazu ausgebildet, Gegenstände durch Adhäsionskräfte, insbesondere Van-der-Waals-Kräfte, zu greifen. Hierzu sind das Greifelement bzw. die Greifelemente bei einem Adhäsionsgreifer haftstrukturiert ausgebildet.

In einigen bevorzugten Ausführungsformen ist vorgesehen, dass die Greifeinheit einen ersten Teil und einen zweiten Teil umfasst, wobei an dem ersten Teil ein oder mehrere Greifelemente der Greifeinheit angeordnet sind, wobei der erste Teil durch den zweiten Teil mit dem Förderelement gekoppelt ist, und wobei der erste Teil an dem zweiten Teil schwenkbar gelagert ist. Eine solche Ausbildung der Greifeinheit bietet zum einen Vorteile im Hinblick auf die Anordnung der Greifeinheit an dem zu greifenden Gegenstand. Durch Schwenken des ersten Teils kann eine gewünschte Ausrichtung der Greifeinheit relativ zu dem Gegenstand realisiert werden. Zudem bietet die Ausbildung auch Vorteile im Hinblick auf die Anordnung eines gegriffenen Gegenstands auf dem Stetigförderer. Konkret kann der erste Teil beispielsweise entgegen der Laufrichtung des Förderelements geschwenkt werden, sodass der Gegenstand in Laufrichtung hinter der Greifeinheit auf dem Stetigförderer angeordnet wird. Besonders bevorzugt ist der erste Teil um eine senkrecht zu der Laufrichtung ausgerichtete Schwenkachse an dem zweiten Teil schwenkbar gelagert. Vorzugsweise ist dem ersten Teil ein Aktuator zugeordnet, der dazu ausgebildet ist, den ersten Teil relativ zu dem zweiten Teil zu schwenken.

Vorzugsweise ist die Greifeinheit zweiteilig ausgebildet. Das bedeutet, dass zusätzlich zu dem ersten Teil und dem zweiten Teil kein weiterer Teil vorhanden ist, der an dem ersten Teil oder an dem zweiten Teil schwenkbar gelagert ist.

In einigen bevorzugten Ausführungsformen ist vorgesehen, dass ein von dem Förderelement beabstandetes, freies Ende der Greifeinheit durch das Greifelement oder durch die Greifelemente gebildet ist. Eine solche Anordnung des Greifelements oder der Greifelemente ist bevorzugt, weil dadurch die Kontaktierung von zu greifenden Gegenständen durch das Greifelement oder durch die Greifelemente erleichtert wird. Ist die Greifeinheit länglich ausgebildet, handelt es sich bei dem freien Ende um ein freies Längsende der Greifeinheit. Ist die Greifeinheit als Sauggreifer ausgebildet, wird das freie Ende der Greifeinheit vorzugsweise durch eine umlaufende Dichtlippe eines Saugelements des Sauggreifers oder durch umlaufende Dichtlippen von Saugelementen des Sauggreifers gebildet.

Die Halteebene der Greifeinheit wird durch das Greifelement oder durch die Greifelemente gemeinsam definiert. Die Halteebene der Greifeinheit ist die Ebene, in der die Greifeinheit bei einem Greifvorgang mit dem zu greifenden Gegenstand in Kontakt gelangt. Vorzugsweise sind das Greifelement oder die Greifelemente derart angeordnet, dass die Halteebene bei gestreckter Greifeinheit, wenn also der erste Teil und der zweite Teil nicht zueinander gewinkelt sind, senkrecht zu der Erstreckung der Greifeinheit von dem Förderelement zu dem freien Ende ausgerichtet ist.

In einigen bevorzugten Ausführungsformen ist die Greifeinheit bezogen auf eine Breitenerstreckung des Stetigförderers mittig an dem Stetigförderer angeordnet. Die Breitenerstreckung des Stetigförderers ist senkrecht zu der Laufrichtung des Förderelements ausgerichtet. Ist die Greifeinheit mittig angeordnet, so wird ein durch die Greifeinheit gegriffener Gegenstand durch Bewegen der Greifeinheit in die Laufrichtung besonders sicher auf den Stetigförderer gezogen.

In einigen bevorzugten Ausführungsformen ist vorgesehen, dass die Greifeinrichtung wenigstens eine weitere Greifeinheit umfasst, wobei die Greifeinheit und die weitere Greifeinheit in Laufrichtung hintereinander angeordnet sind. Durch das Vorsehen einer weiteren Greifeinheit kann die Effizienz der Vorrichtung im Hinblick auf die Durchführung von Handhabungsvorgängen weiter gesteigert werden. Sind beispielsweise zwei in Laufrichtung hintereinander angeordnete Greifeinheiten vorhanden, so kann bei einem vollständigen Umlauf des Förderelementes durch jede der Greifeinheiten jeweils ein Handhabungsvorgang durchgeführt werden.

In einigen bevorzugten Ausführungsformen ist vorgesehen, dass der Stetigförderer wenigstens ein weiteres umlaufendes Förderelement umfasst, wobei das Förderelement und das weitere Förderelement nebeneinander angeordnet sind, und wobei ein Abstand zwischen dem Förderelement und dem weiteren Förderelement einstellbar ist. Durch eine solche Ausbildung kann die Flexibilität der Vorrichtung gesteigert werden. Sollen beispielsweise klein dimensionierte Gegenstände mittels der Vorrichtung gehandhabt werden, so wird ein geringer Abstand zwischen den Förderelementen eingestellt. Sollen hingegen größere Gegenstände gehandhabt werden, so wird auch ein größerer Abstand zwischen den Förderelementen eingestellt. Zudem wird durch das Vorsehen von zwei Förderelementen zwischen den Förderelementen ein Zwischenraum geschaffen, der für die Anordnung des Greifelements bzw. der Greifelemente besonders geeignet ist. Vorzugsweise ist das Greifelement zwischen den Förderelementen angeordnet. Insbesondere sind die Förderelemente durch dieselbe Antriebseinheit in die Laufrichtung antreibbar. Den Förderelementen kann jedoch auch eine jeweils eigene Antriebseinheit zugeordnet sein.

In einigen bevorzugten Ausführungsformen ist vorgesehen, dass die Vorrichtung wenigstens eine bildgebende Sensoreinheit umfasst, die dazu ausgebildet ist, zu greifende Gegenstände zu erfassen. Mittels einer solchen Sensoreinheit kann für einen Benutzer der Vorrichtung eine Sichtkontrolle realisiert werden, wodurch eine gewünschte Anordnung der Greifeinheit an dem zu greifenden Gegenstand erleichtert wird. Vorzugsweise ist die Sensoreinheit als Kamerasensor ausgebildet.

Vorzugsweise umfasst die Vorrichtung wenigstens eine Anschlussstruktur, insbesondere Anschlussflansch, zum Befestigen der Vorrichtung an einer Handhabungseinrichtung. Durch die Befestigung an der Handhabungseinrichtung kann die Flexibilität im Hinblick auf die Durchführung von Handhabungsvorgängen gesteigert werden. Beispielsweise kann die Handhabungsvorrichtung die daran befestigte Vorrichtung in vertikaler Richtung verlagern oder einen Neigungswinkel der Vorrichtung verändern. Bevorzugt ist die Anschlussstruktur an dem zuvor erwähnten Grundkörper des Stetigförderers befestigt oder einstückig mit dem Grundkörper ausgebildet.

Das erfindungsgemäße Handhabungssystem umfasst eine wie vorstehend beschrieben ausgebildete Vorrichtung und eine Handhabungseinrichtung zum Handhaben der Vorrichtung. Vorzugsweise ist die Vorrichtung, insbesondere der Stetigförderer, an der Handhabungseinrichung lösbar befestigt.

Hinsichtlich der mit dem Handhabungssystem erzielbaren Vorteile wird auf die diesbezüglichen Ausführungen zur Vorrichtung bzw. zum Verfahren verwiesen. Zur weiteren Ausgestaltung des Handhabungssystems können die im Zusammenhang mit der Vorrichtung bzw. dem Verfahren beschriebenen Merkmale dienen.

Das erfindungsgemäße Verfahren zum Handhaben von Gegenständen mittels einer wie vorstehend beschrieben ausgebildeten Vorrichtung oder eines wie vorstehend beschrieben ausgebildeten Handhabungssystems umfasst wenigstens folgendes:
Greifen wenigstens eines Gegenstands, insbesondere Kartonage, durch die Greifeinheit. Vorzugsweise wird der Gegenstand durch Erzeugen eines Unterdrucks zwischen dem Gegenstand und einem Greifelement oder mehreren Greifelementen der Greifeinheit gegriffen.

Antreiben des Förderelements in Laufrichtung durch die Antriebseinheit, wobei die Greifeinheit durch Zwangskopplung mit dem Förderelement in die Laufrichtung mitbewegt und der gegriffene Gegenstand auf dem Stetigförderer angeordnet wird. Vorzugsweise wird der gegriffene Gegenstand nach Anordnung auf dem Stetigförderer von der Greifeinheit abgelöst. Der Gegenstand kann dann unabhängig von der Greifeinheit weiter gehandhabt werden. Je nach Ausbildung der Greifeinheit kann der gegriffene Gegenstand auf jeweils unterschiedliche Art und Weise abgelöst werden. Ist die Greifeinheit beispielsweise als Sauggreifer ausgebildet, so wird der Gegenstand vorzugsweise durch Belüften des Volumens, in dem der Unterdruck hergestellt ist, von der Greifeinheit abgelöst.

Vorteile und Weiterbildungsmöglichkeiten der Vorrichtung sind als ebenso in Bezug auf das Verfahren beschrieben zu verstehen und umgekehrt sind Vorteile und Weiterbildungsmöglichkeiten des Verfahrens als ebenso in Bezug auf die Vorrichtung beschrieben zu verstehen.

In einigen bevorzugten Ausführungsformen des Verfahrens ist vorgesehen, dass die Greifeinheit den Gegenstand bezogen auf eine Vertikalerstreckung des Gegenstands in einem vertikal unteren Bereich des Gegenstands greift. Greift die Greifeinheit den Gegenstand in dem vertikal unteren Bereich, so wird der Gegenstand anschließend besonders sicher auf den Stetigförderer gezogen. Würde die Greifeinheit den Gegenstand beispielsweise in einem vertikal oberen Bereich greifen, so könnte der untere Bereich beim Versuch des Aufziehens auf den Stetigförderer an einem vorderen Ende des Stetigförderers hängenbleiben. Dadurch könnte der Gegenstand von der Greifeinheit abgelöst werden und zu Boden fallen. Besonders bevorzugt greift die Greifeinheit den Gegenstand benachbart zu einer vertikal unteren Kante des Gegenstands.

In einigen bevorzugten Ausführungsformen des Verfahrens wird ein Neigungswinkel des Stetigförderers zum Greifen des Gegenstands verändert. Durch die Veränderung des Neigungswinkels kann die Position der Greifeinheit in vertikaler Richtung an die Position des zu greifenden Gegenstands angepasst werden.

In einigen bevorzugten Ausführungsformen des Verfahrens ist vorgesehen, dass der erste Teil der Greifeinheit zum Greifen des Gegenstands relativ zu dem zweiten Teil geschwenkt wird. Vorzugsweise wird der erste Teil um die senkrecht zu der Laufrichtung ausgerichtete Schwenkachse relativ zu dem zweiten Teil geschwenkt. In bestimmten Situationen kann es auftreten, dass eine Halteebene der Greifeinheit zunächst schräg zu einer zu greifenden Fläche des Gegenstands ausgerichtet ist. Dies kann beispielsweise dann auftreten, wenn der Neigungswinkel des Stetigförderers verändert wird oder wenn die zu greifende Fläche nicht vertikal ausgerichtet ist, sondern schräg zu einer vertikal ausgerichteten Achse. Durch das Schwenken des ersten Teils der Greifeinheit kann die Ausrichtung der Greifeinheit an die Ausrichtung der zu greifenden Fläche des Gegenstands angepasst werden, sodass der Gegenstand sicher gegriffen werden kann. Vorzugsweise wird der erste Teil bereits vor Kontaktieren des Gegenstands durch die Greifeinheit relativ zu dem zweiten Teil geschwenkt. Dadurch kann der erste Teil, insbesondere das Greifelement oder die Greifelemente, an dem Gegenstand ausgerichtet werden. Die Schwenkbewegung wird vorzugsweise durch einen dem ersten Teil zugeordneten Aktuator bewirkt.

In einigen bevorzugten Ausführungsformen ist vorgesehen, dass der erste Teil nach Greifen des Gegenstands relativ zu dem zweiten Teil geschwenkt wird, um den gegriffenen Gegenstand auf dem Stetigförderer anzuordnen. Vorzugsweise wird der erste Teil relativ zu dem zweiten Teil derart geschwenkt, dass der gegriffene Gegenstand in Laufrichtung hinter der Greifeinheit auf dem Stetigförderer angeordnet wird.

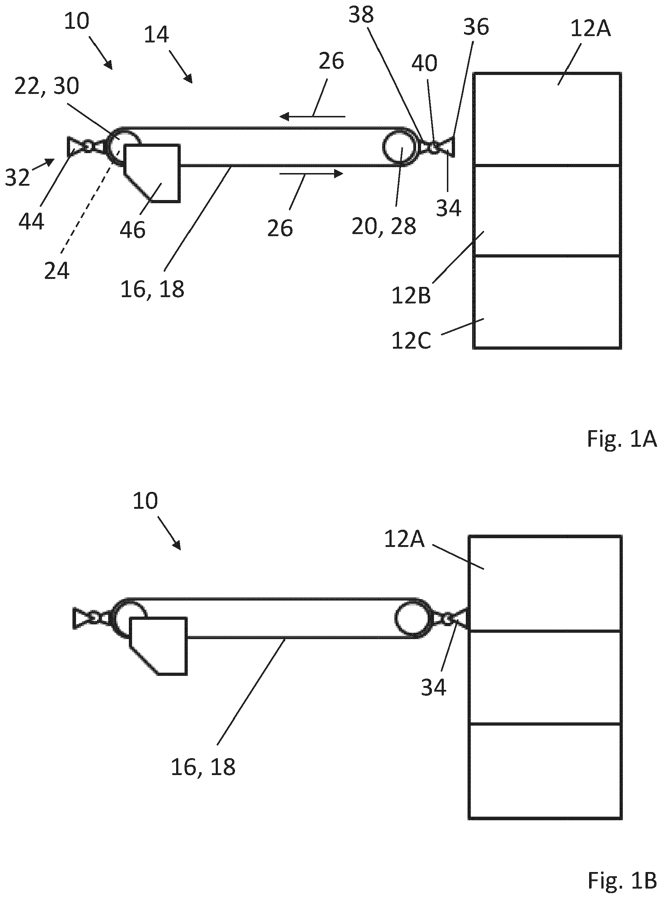

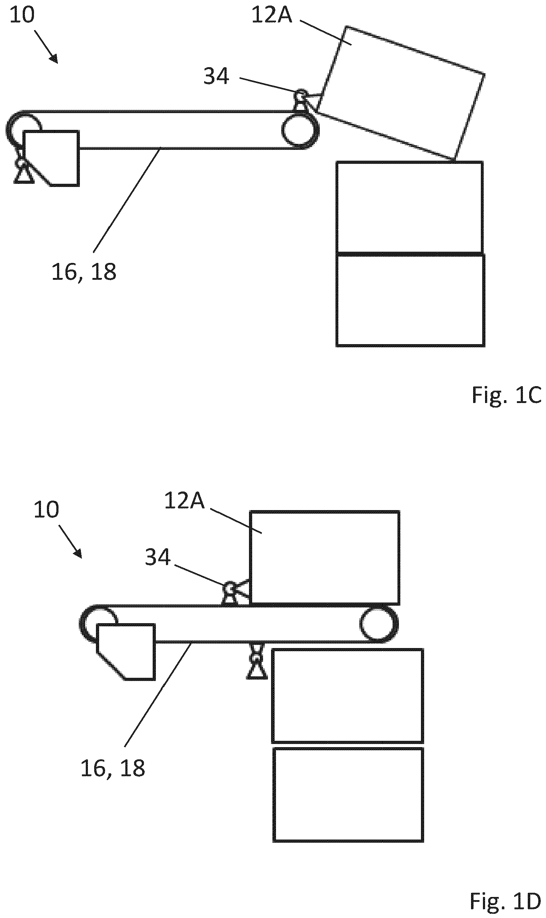

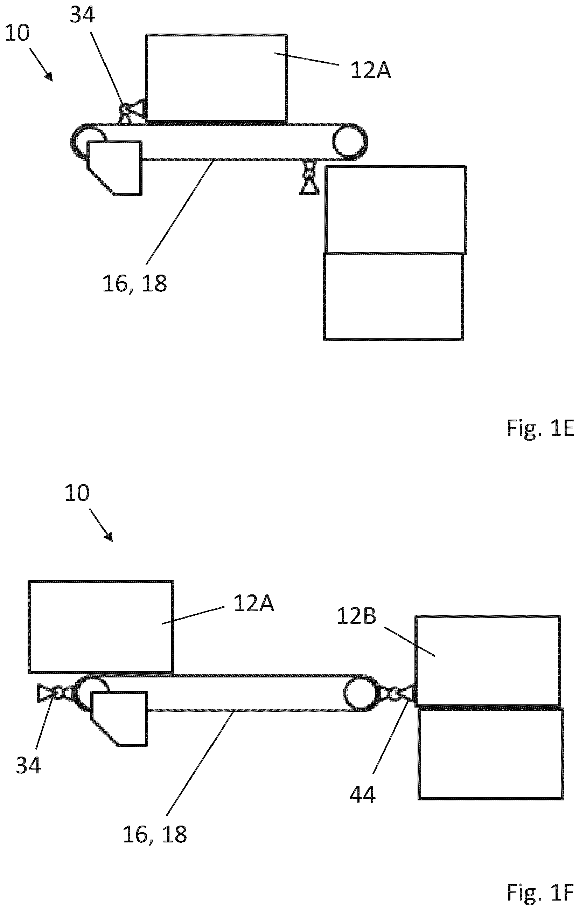

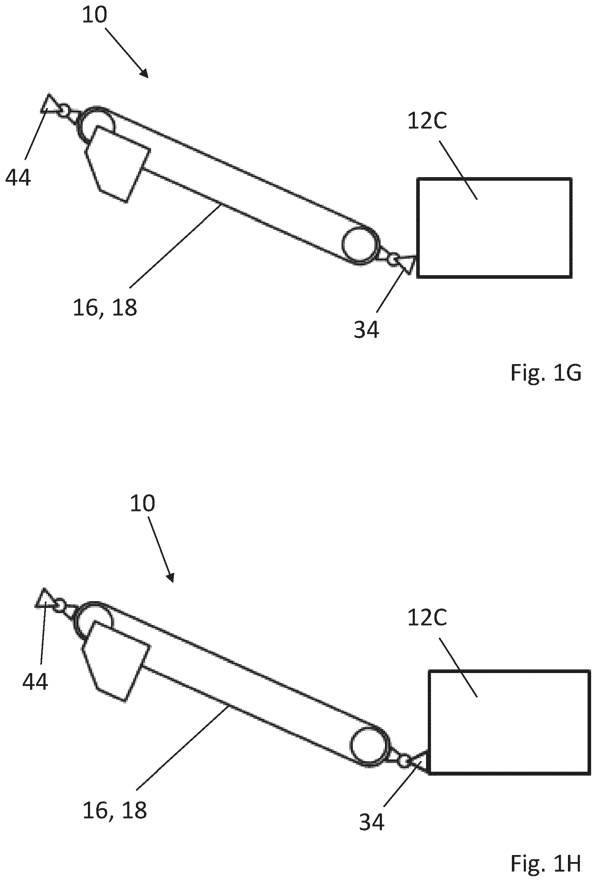

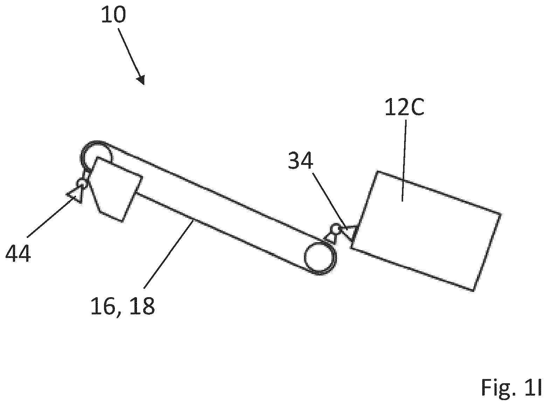

Die Erfindung wird im Folgenden anhand der Figuren näher beschrieben, wobei gleiche oder funktional gleiche Elemente gegebenenfalls lediglich einmal mit Bezugszeichen versehen sind. Die Beschreibung dient als Beispiel und ist nicht einschränkend zu verstehen. Es zeigen
- Figur 1A bis 1I: eine Vorrichtung zum Handhaben von Gegenständen zu verschiedenen Zeitpunkten während eines Entladevorgangs.

Die Figuren 1A bis 1I zeigen eine Seitenansicht einer Vorrichtung 10 zum Handhaben von Gegenständen 12. Bei den Gegenständen 12 handelt es sich vorliegend um Kartonagen 12, die in einem Container oder dergleichen übereinandergestapelt gelagert sind. Die Figuren zeigen die Vorrichtung 10 zu aufeinanderfolgenden Zeitpunkten während eines Entladevorgangs. Im Rahmen des später noch näher beschriebenen Entladevorgangs werden drei zunächst übereinandergestapelt angeordnete Gegenstände 12A, 12B und 12C mittels der Vorrichtung 10 gehandhabt bzw. entladen. Es sei darauf hingewiesen, dass die Vorrichtung 10 in den Figuren nur schematisch dargestellt ist.

Zunächst wird mit Bezug auf Figur 1A die Ausbildung der Vorrichtung 10 näher erläutert.

Die Vorrichtung 10 umfasst eine Fördereinrichtung 14 mit einem Stetigförderer 16. Der Stetigförderer 16 umfasst ein umlaufendes Förderelement 18. In dem dargestellten Ausführungsbeispiel ist der Stetigförderer 16 als Bandförderer 16 ausgebildet. Das Förderelement 18 ist ein Förderband 18. Der Stetigförderer 16 umfasst außerdem eine drehbar gelagerte erste Umlenkrolle 20 und eine drehbar gelagerte zweite Umlenkrolle 22. Das Förderelement 18 ist um die Umlenkrollen 20 und 22 herumgeführt. Vorliegend bilden die Umlenkrollen 20 und 22 ein vorderes Ende 28 bzw. ein hinteres Ende 30 des Stetigförderers 16.

Der Stetigförderer 16 umfasst außerdem eine Antriebseinheit 24, die dazu ausgebildet ist, das Förderelement 18 in eine Laufrichtung 26 anzutreiben. Vorliegend ist die Antriebseinheit 24 in die hintere Umlenkrolle 22 integriert, was in Figur 1A gestrichelt angedeutet ist. Entsprechend ist die hintere Umlenkrolle 22 als Antriebsrolle ausgebildet.

Vorliegend umfasst der Stetigförderer 16 zusätzlich zu dem Förderelement 18 ein weiteres Förderelement, das benachbart zu dem Förderelement 18 angeordnet und deshalb in den Figuren durch das Förderelement 18 verdeckt ist. Das weitere Förderelement kann durch die Antriebseinheit 24 antreibbar sein. Dem weiteren Förderelement kann jedoch auch eine eigene Antriebseinheit zugeordnet sein, beispielsweise eine von dem Förderelement 18 unabhängige Antriebsrolle.

Die Vorrichtung 10 umfasst außerdem eine Greifeinrichtung 32. Die Greifeinrichtung 32 umfasst eine Greifeinheit 34. Die Greifeinheit 34 ist dazu ausgebildet, wenigstens einen Gegenstand 12 zu greifen. Die Greifeinheit 34 kann auch dazu ausgebildet sein, mehrere Gegenstände 12 gleichzeitig zu greifen. Vorliegend ist die Greifeinheit 34 als Sauggreifer 34 ausgebildet. Insofern umfasst die Greifeinheit 34 ein oder mehrere in den Figuren nicht erkenntliche Greifelemente, die als Saugelemente ausgeführt sind. Ein von dem Förderelement 18 beabstandetes, freies Ende der Greifeinheit 34 wird durch das Greifelement oder durch die Greifelemente gebildet, insbesondere durch eine umlaufende Dichtlippe des Saugelements oder durch umlaufende Dichtlippen der Saugelemente.

Die Greifeinheit 34 ist derart mit dem Förderelement 18 mechanisch gekoppelt, dass sie mit dem Förderelement 18 bei einem Antrieb des Förderelements 18 in die Laufrichtung 26 mit dem Förderelement 18 in die Laufrichtung 26 mitbewegt wird.

Vorliegend umfasst die Greifeinheit 34 einen ersten Teil 36 und einen zweiten Teil 38. Das Greifelement bzw. die Greifelemente sind an dem ersten Teil 36 angeordnet. Der erste Teil 36 ist durch den zweiten Teil 38 mit dem Förderelement 18 gekoppelt. Beispielsweise ist der zweite Teil 38 an dem Förderelement 18 befestigt. Der erste Teil 36 ist durch ein Schwenkgelenk 40 mit dem zweiten Teil 38 verbunden. Vorliegend ist das Schwenkgelenk 40 derart ausgeführt, dass der erste Teil 36 um eine senkrecht zu der Laufrichtung 26 ausgerichtete Schwenkachse schwenkbar ist. Die Greifeinheit 34 umfasst einen Aktuator, der dazu ausgebildet ist, den ersten Teil 36 relativ zu dem zweiten Teil 38 um die Schwenkachse zu schwenken. Vorliegend ist der Aktuator in das Schwenkgelenk 40 integriert und deshalb nicht erkenntlich.

In Figur 1A ist die Greifeinheit 34 gestreckt. Bei einer solchen Ausrichtung des ersten Teils 36 und des zweiten Teils 38 relativ zueinander ist die Halteebene der Greifeinheit 34 senkrecht zu der Erstreckung der Greifeinheit 34 von dem Förderelement 18 zu dem freien Ende der Greifeinheit 34 ausgerichtet.

Wie zuvor erwähnt wurde, umfasst der Stetigförderer 16 vorliegend zusätzlich zu dem Förderelement 18 ein weiteres Förderelement. Die Greifeinheit 34 ist bezogen auf die Breitenerstreckung des Stetigförderers 16 mittig an dem Stetigförderer 16 angeordnet, also in einem Zwischenraum zwischen dem Förderelement 18 und dem weiteren Förderelement.

Vorzugsweise ist der Abstand zwischen dem Förderelement 18 und dem weiteren Förderelement veränderbar. Dies hat den Vorteil, dass der Stetigförderer 16 in seiner Breitenerstreckung an die Größe der zu greifenden Gegenstände 12 angepasst werden kann.

Bei dem in den Figuren dargestellten Ausführungsbeispiel umfasst die Greifeinrichtung 32 zusätzlich zu der Greifeinheit 34 eine weitere Greifeinheit 44. Im Hinblick auf die Ausbildung der weiteren Greifeinheit 44 wird auf die vorstehenden Ausführungen zu der Greifeinheit 34 verwiesen. Die Greifeinheit 34 und die weitere Greifeinheit 44 sind in Laufrichtung 26 hintereinander angeordnet. Bei einem vollständigen Umlauf des Förderelements 18 kann durch jede der Greifeinheiten 34 und 44 jeweils ein Gegenstand 12 gegriffen und entladen werden, wie nachstehend noch näher erläutert wird.

Die Vorrichtung 10 umfasst außerdem eine Anschlussstruktur 46, die vorliegend als Anschlussflansch 46 ausgebildet ist. Die Anschlussstruktur 46 ist beispielsweise an einem Grundkörper des Stetigförderers 16 befestigt, an dem die Umlenkrollen 20 und 22 drehbar gelagert sind. Durch die Anschlussstruktur 46 ist die Vorrichtung 10 mit einer in den Figuren nicht dargestellten Handhabungseinrichtung verbindbar, die zum Handhaben der Vorrichtung 10 ausgebildet ist. Vorliegend umfasst die Vorrichtung 10 ein weiteres Anschlusselement, das auf der anderen Seite des Stetigförderers 16 angeordnet ist. In der dargestellten Seitenansicht ist das weitere Anschlusselement durch das Anschlusselement 46 verdeckt und deshalb nicht erkenntlich.

Im Folgenden wird mit zusätzlichem Bezug auf die Figuren 1B bis 1I der Ablauf des Entladevorgangs mittels der Vorrichtung 10 näher erläutert.

Wie aus Figur 1B erkenntlich ist, wird zunächst die Greifeinheit 34 an einem vertikal unteren Bereich des Gegenstands 12A angeordnet. Vorliegend wird die Greifeinheit 34 unmittelbar benachbart zu einer vertikal unteren Kante des Gegenstands 12A an dem Gegenstand 12A angeordnet. Sodann wird ein Unterdruck zwischen dem Gegenstand 12A und dem Greifelement bzw. den Greifelementen der Greifeinheit 34 erzeugt, wodurch der Gegenstand 12A durch die Greifeinheit 34 gegriffen wird. Das Förderelement 18 steht während des Greifens des Gegenstands 12 bevorzugt still.

Wie aus den Figuren 1C bis 1E erkenntlich ist, wird anschließend das Förderelement 18 durch die Antriebseinheit 24 in die Laufrichtung 26 angetrieben. Die Greifeinheit 34 mitsamt dem gegriffenen Gegenstand 12A wird durch Zwangskopplung mit dem Förderelement 18 mitbewegt, wodurch der gegriffene Gegenstand 12A auf den Stetigförderer 16 gezogen und insofern auf dem Stetigförderer 16 angeordnet wird. Der erste Teil 36 der Greifeinheit 34 wird dabei entgegen der Laufrichtung 26 um die Schwenkachse geschwenkt, sodass der Gegenstand 12A in Laufrichtung 26 hinter der Greifeinheit 34 angeordnet wird. Weil die Greifeinheit 34 den Gegenstand 12A in dessen vertikal unteren Bereich greift, wird das Ziehen des Gegenstands 12A auf den Stetigförderer 16 nicht durch die vertikal untere Kante des Gegenstands 12A blockiert.

Anschließend wird der gegriffene Gegenstand 12A von der Greifeinheit 34 abgelöst, wie aus Figur 1F erkenntlich ist. Im Falle der als Saugreifer 34 ausgebildeten Greifeinheit 34 wird hierzu der Zwischenraum zwischen dem Greifelement bzw. den Greifelementen und dem Gegenstand 12A belüftet. Der abgelöste Gegenstand 12A kann sodann unabhängig von der Greifeinheit 34 gehandhabt werden. Beispielsweise wird der abgelöste Gegenstand 12A einem nicht dargestellten weiteren Stetigförderer zugeführt, der hinter dem Stetigförderer 16 angeordnet ist.

Aus Figur 1F ist außerdem erkenntlich, dass ein anschließender Handhabungsvorgang mittels der weiteren Greifeinheit 44 durchgeführt wird. Der nun zu greifende Gegenstand 12B ist vertikal tiefer angeordnet als der zuvor gegriffene Gegenstand 12A. Um den Gegenstand 12B zu greifen, wird die Vorrichtung 10 durch die Handhabungseinrichtung vertikal nach unten verlagert, wobei der Neigungswinkel der Vorrichtung 10 konstant bleibt.

Die Figuren 1G bis 1I zeigen einen weiteren Handhabungsvorgang, bei dem ein Gegenstand 12C gegriffen wird, der vertikal tiefer angeordnet ist als der zuvor gegriffene Gegenstand 12B. Um den Gegenstand 12C zu greifen, wird der Neigungswinkel der Vorrichtung 10 durch die Handhabungseinrichtung derart verändert, dass das vordere Ende 28 des Stetigförderers 16 vertikal tiefer angeordnet ist als das hintere Ende 30 des Stetigförderers 16. Durch die Neigung des Stetigförderers 16 kann ein Berührkontakt zwischen der Unterseite des Stetigförderers 16 und einem nicht dargestellten Boden vermieden werden, auf dem der Gegenstand 12C angeordnet ist. Wie aus Figur 1G erkenntlich ist, führt die Neigung des Stetigförderers 16 dazu, dass eine zu greifende Fläche des Gegenstands 12C zunächst schräg zu der Halteebene der Greifeinheit 34 ausgerichtet ist. Um eine flächige Anlage der Greifeinheit 34, insbesondere des Greifelements oder der Greifelemente, an dem Gegenstand 12C zu ermöglichen, wird der erste Teil 36 der Greifeinheit 34 relativ zu dem zweiten Teil 38 in Laufrichtung 26 um die Schwenkachse geschwenkt.

## Patentansprüche

1. Vorrichtung (10) zum Handhaben von Gegenständen (12), insbesondere Kartonagen (12), mit
einer Fördereinrichtung (14), die wenigstens einen Stetigförderer (16) umfasst, wobei der Stetigförderer (16) wenigstens ein umlaufendes Förderelement (18) umfasst, das durch eine Antriebseinheit (24) in wenigstens eine Laufrichtung (26) antreibbar ist, und mit
einer Greifeinrichtung (32), die wenigstens eine Greifeinheit (34) umfasst, wobei die Greifeinheit (34) dazu ausgebildet ist, wenigstens einen Gegenstand (12) zu greifen und den gegriffenen Gegenstand (12) auf dem Stetigförderer (16), insbesondere auf dem Förderelement (18), anzuordnen, **dadurch gekennzeichnet, dass**
die Greifeinheit (34) derart mit dem Förderelement (18) gekoppelt ist, dass sie mit dem Förderelement (18) in die Laufrichtung (26) mitbewegt wird.

2. Vorrichtung (10) nach Anspruch 1, **dadurch gekennzeichnet, dass** der Stetigförderer (16) als Bandförderer, Kettenförderer oder Kreisförderer ausgebildet ist.

3. Vorrichtung (10) nach einem der vorherigen Ansprüche, **dadurch gekennzeichnet, dass** die Greifeinheit (34) als Sauggreifer, Klemmgreifer, oder Adhäsionsgreifer ausgebildet ist.

4. Vorrichtung (10) nach einem der vorherigen Ansprüche, **dadurch gekennzeichnet, dass** die Greifeinheit (34) einen ersten Teil (36) und einen zweiten Teil (38) umfasst, wobei an dem ersten Teil (36) ein oder mehrere Greifelemente der Greifeinheit (34) angeordnet sind, wobei der erste Teil (36) durch den zweiten Teil (38) mit dem Förderelement (18) gekoppelt ist, und wobei der erste Teil (36) an dem zweiten Teil (38) schwenkbar gelagert ist, insbesondere um eine senkrecht zu der Laufrichtung (26) ausgerichtete Schwenkachse (42).

5. Vorrichtung (10) nach dem vorherigen Anspruch, **dadurch gekennzeichnet, dass** ein von dem Förderelement (18) beabstandetes, freies Ende der Greifeinheit (34) durch das Greifelement oder durch die Greifelemente gebildet ist.

6. Vorrichtung (10) nach einem der vorherigen Ansprüche, **dadurch gekennzeichnet, dass** die Greifeinheit (34) bezogen auf eine Breitenerstreckung des Stetigförderers (16) mittig an dem Stetigförderer (16) angeordnet ist.

7. Vorrichtung (10) nach einem der vorherigen Ansprüche, **dadurch gekennzeichnet, dass** die Greifeinrichtung (32) wenigstens eine weitere Greifeinheit (44) umfasst, wobei die Greifeinheit (34) und die weitere Greifeinheit (44) in Laufrichtung (26) hintereinander angeordnet sind.

8. Vorrichtung (10) nach einem der vorherigen Ansprüche, **dadurch gekennzeichnet, dass** der Stetigförderer (16) wenigstens ein weiteres umlaufendes Förderelement umfasst, wobei das Förderelement (18) und das weitere Förderelement nebeneinander angeordnet sind, und wobei ein Abstand zwischen dem Förderelement (18) und dem weiteren Förderelement einstellbar ist, insbesondere wobei die Vorrichtung (10) einen Aktuator zum Einstellen des Abstands umfasst.

9. Vorrichtung (10) nach einem der vorherigen Ansprüche, **gekennzeichnet durch** wenigstens eine bildgebende Sensoreinheit, die dazu ausgebildet ist, zu greifende Gegenstände (12) zu erfassen.

10. Handhabungssystem, umfassend eine Vorrichtung (10) gemäß einem der vorherigen Ansprüche und eine Handhabungseinrichtung zum Handhaben der Vorrichtung (10) .

11. Verfahren zum Handhaben von Gegenständen (12) mittels einer Vorrichtung (10) gemäß einem der Ansprüche 1 bis 9 oder mittels eines Handhabungssystems gemäß Anspruch 10, umfassend:
Greifen wenigstens eines Gegenstands (12), insbesondere Kartonage (12), durch die Greifeinheit (34),
Antreiben des Förderelements (18) in Laufrichtung (26) durch die Antriebseinheit (24), wobei die Greifeinheit (34) durch Zwangskopplung mit dem Förderelement (18) in die Laufrichtung (24) mitbewegt und der gegriffene Gegenstand (12) auf dem Stetigförderer (26) angeordnet wird.

12. Verfahren nach Anspruch 11, **dadurch gekennzeichnet, dass** die Greifeinheit (34) den Gegenstand (12) bezogen auf eine Vertikalerstreckung des Gegenstands (12) in einem vertikal unteren Bereich des Gegenstands (12) greift.

13. Verfahren nach einem der Ansprüche 11 und 12, **dadurch gekennzeichnet, dass** ein Neigungswinkel des Stetigförderers (16) zum Greifen des Gegenstands (12) verändert wird.

14. Verfahren nach einem der Ansprüche 11 bis 13, **dadurch gekennzeichnet, dass** der erste Teil (36) zum Greifen des Gegenstands (12) relativ zu dem zweiten Teil (38) geschwenkt wird, insbesondere wobei der erste Teil (36) vor Kontaktieren des Gegenstands (12) durch die Greifeinheit (34) relativ zu dem zweiten Teil (38) geschwenkt wird.

15. Verfahren nach einem der Ansprüche 11 bis 14, **dadurch gekennzeichnet, dass** der erste Teil (36) nach Greifen des Gegenstands (12) relativ zu dem zweiten Teil (38) geschwenkt wird, um den gegriffenen Gegenstand (12) auf dem Stetigförderer (26) anzuordnen.
